# EUROPÄISCHE PATENTANMELDUNG

(11) **EP 2 168 707 A1**
(43) Veröffentlichungstag der Anmeldung: **31.03.2010**
(21) Anmeldenummer: 09169047.9
(22) Anmeldetag: 31.08.2009
(51) Int. Cl.: B23K 20/12

(54) **Verfahren zur Herstellung eines integral beschaufelten Rotors sowie Rotor**

(30) Priorität: 26.09.2008 DE 102008049171
(71) Anmelder: MTU Aero Engines GmbH, 80995 München (DE)
(72) Erfinder: Stiehler, Frank, 04924, Bad Liebenwerda (DE); Knott, Ulrich, 80997, München (DE)

(57) **Zusammenfassung**

Ein Verfahren zum Herstellen eines integral beschaufelten Rotors sieht vor, dass ein Rotorgrundkörper (10) mit einer ersten Schweißkontaktfläche (14) und ein Schaufelkranz (12) mit einer zweiten Schweißkontaktfläche (16) durch Reibschweißen verbunden werden. Die erste und die zweite Schweißkontaktfläche (14, 16) besitzen unterschiedliche Geometrien. Ein Erstkontaktbereich (18) wird zwischen Abschnitten der ersten und der zweiten Schweißkontaktfläche (14, 16) gebildet. Beim Reibschweißen bildet sich eine Schweißzone (24, 26, 28), die sich vom Erstkontaktbereich (18) ausgehend vergrößert, um sich über die erste und zweite Schweißkontaktfläche (14, 16) zu erstrecken.

## Beschreibung

Die Erfindung betrifft ein Verfahren zum Herstellen eines integral beschaufelten Rotors, insbesondere Gasturbinenrotors, sowie den Rotor selbst.

Gasturbinenrotoren mit integraler Beschaufelung bezeichnet man abhängig davon, ob ein im Querschnitt scheibenförmiger oder ein im Querschnitt ringförmiger Rotor bzw. Rotorträger (im Folgenden Rotorgrundkörper genannt) vorhanden ist, als Blisk bzw. Bling. Blisk ist die Kurzform von Bladed Disk und Bling von Bladed Ring.

Aus dem Stand der Technik ist es bekannt, Gasturbinenrotoren mit integraler Beschaufelung durch Fräsen aus dem Vollen herzustellen, was natürlich sehr aufwendig und teuer ist, weshalb dieses Verfahren nur für relativ kleine Gasturbinenrotoren Verwendung gefunden hat.

Ein anderes, bei großen Rotoren Anwendung findendes Verfahren ist das Reibschweißen. Dabei werden Rotorgrundkörper und die Schaufeln separat hergestellt und anschließend miteinander reibverschweißt, insbesondere durch Linearreibschweißen. Ein Vorteil des Herstellens mittels Schweißen besteht darin, dass Rotorgrundkörper und Turbinenschaufeln aus unterschiedlichen Materialien hergestellt werden können, die den unterschiedlichen Anforderungen dieser Abschnitte des Rotors anpassbar sind. Schwierig ist die Ausrichtung der Schaufeln zum Rotorgrundkörper im gefügten Zustand, insbesondere beim Reibschweißen, bei dem eines der beiden Teile relativ zum anderen bewegt werden muss.

Bei einem Reibschweißverfahren nach dem Stand der Technik werden zwei Schweißkontaktflächen der beiden Teile mittels einer Anpresskraft aneinander gepresst, während die beiden Teile gegeneinander bewegt werden, indem beispielsweise ein Teil mittels einer Schweißkraft rotiert wird, so dass durch die Reibungswärme eine Schweißzone entsteht, die sich über die gesamte Schweißkontaktfläche erstreckt. Ein solches Verfahren erfordert hohe Anpress- und Schweißkräfte, insbesondere bei großen Schweißkontaktflächen.

Aufgabe der Erfindung ist es, ein Verfahren zum Herstellen eines integral beschaufelten Rotors mittels Reibschweißen zu verbessern, so dass bei einem einfachen Reibschweißprozess, insbesondere für große Schweißkontaktflächen, geringere Anpress- und Schweißkräfte benötigt werden und die Kontrolle über den Reibschweißprozess verbessert wird. Ferner soll ein möglichst einfach herstellbarer Rotor angegeben werden.

Das erfindungsgemäße Verfahren sieht hierzu folgende Schritte vor:
a) Bereitstellen eines Rotorgrundkörpers mit einer ersten Schweißkontaktfläche;
b) Bereitstellen eines Schaufelkranzes mit einer zweiten Schweißkontaktfläche, wobei die erste und die zweite Schweißkontaktfläche unterschiedliche Geometrien aufweisen;
c) Bildung eines Erstkontaktbereichs zwischen Abschnitten der ersten und der zweiten Schweißkontaktfläche, indem Rotorgrundkörper und Schaufelkranz aneinandergepresst werden; und
d) Reibschweißen des Rotorgrundkörpers an den Schaufelkranz, wobei eine Schweißzone gebildet wird, die sich ausgehend vom Erstkontaktbereich vergrößert, um sich über die erste und zweite Schweißkontaktfläche zu erstrecken.

Da sich die Schweißzone zu Beginn des Reibschweißens nur im Erstkontaktbereich ausbildet, welcher lediglich einen Abschnitt der ersten und zweiten Kontaktfläche ausmacht, werden geringere Anpress- und Schweißkräfte benötigt, als wenn sich die Schweißzone zu Beginn des Reibschweißens über die gesamte erste und zweite Schweißkontaktfläche erstreckt. Durch die Abstimmung der Geometrien der ersten und zweiten Schweißkontaktfläche sowie der Anpress- und Schweißkräfte wird die Kontrolle über den Reibschweißprozess erhöht. Ferner lassen sich größere Schweißkontaktflächen miteinander verbinden.

Bezüglich des Schaufelkranzes ist es zu erwähnen, dass dieser ein geschlossen umlaufender Ring sein kann, was bevorzugt der Fall ist. Alternativ wäre es auch möglich, den Schaufelkranz aus einzelnen Segmenten zusammenzusetzen, die dann erst durch das Anschweißen des Rotorgrundkörpers miteinander verbunden sind.

Nach der Bildung des Erstkontaktbereichs bildet sich vorzugsweise zumindest ein Spalt zwischen der ersten und zweiten Schweißkontaktfläche, der in Zustellrichtung und/oder entgegen der Zustellrichtung, insbesondere kontinuierlich, zunimmt. Über die funktionale Abhängigkeit der Spaltbreite in und/oder entgegen der Zugrichtung kann der Reibschweißprozess beeinflusst werden.

Der Erstkontaktbereich kann an einem Rand der ersten und/oder zweiten Schweißkontaktfläche gebildet werden. Somit wird auf einfache Weise eine exakte Positionierung des Erstkontaktbereichs ermöglicht.

Bevorzugt liegt der Erstkontaktbereich an dem in Zustellrichtung entfernten Rand der ersten und/oder zweiten Schweißkontaktfläche. Dies verhindert auf einfache Weise, dass ein Teilbereich einer Schweißkontaktfläche durch die Bewegung in Zustellrichtung über die andere Schweißkontaktfläche hinweg bewegt wird, bevor sich in diesem Teilbereich eine Schweißzone ausgebildet hat.

Gemäß einer bevorzugten Ausführungsform hat die erste Schweißkontaktfläche eine Kegelstumpfform, und/oder die zweite Schweißkontaktfläche ist als konische Öffnung ausgebildet. Somit weisen die Schweißkontaktflächen einfache Geometrien auf, und der Abstand der Schweißkontaktflächen außerhalb des Erstkontaktbereichs wird durch den Winkel der Schweißkontaktflächen zueinander bestimmt. Die Zunahme des Abstandes der Schweißkontaktflächen bzw. der Spaltbreite zwischen den Schweißkontaktflächen in Abhängigkeit von der Distanz vom Erstkontaktbereich ist bevorzugt linear.

Gemäß einer weiteren Ausführungsform der Erfindung liegt der Erstkontaktbereich, im Querschnitt gesehen, in dem mittleren Drittel der Schweißkontaktflächen. Auf diese Weise ist eine exakte Positionierung des Erstkontaktbereichs nicht unbedingt notwendig, da eine Verschiebung der Erstkontaktfläche in Richtung beider Ränder der Schweißkontaktfläche möglich ist.

Vorzugsweise vergrößert sich die Schweißzone in zwei Schweißrichtungen, ausgehend vom Erstkontaktbereich. Durch die Vergrößerung der Schweißzone in zwei Schweißrichtungen kann sich die Schweißzone schneller vergrößern, und die Zeitdauer des Reibschweißprozesses verkürzt sich, wodurch eine bessere Auslastung der Schweißanlage ermöglicht wird.

Beispielsweise kann die erste und/oder zweite Schweißkontaktfläche, im Querschnitt gesehen, eine Bogenform aufweisen. Dies ermöglicht eine genau vorbestimmbare Erstkontaktfläche und eine nicht-lineare Zunahme des Abstandes der Schweißkontaktflächen bzw. der Spaltbreite zwischen den Schweißkontaktflächen in Abhängigkeit von der Distanz vom Erstkontaktbereich.

Die erste Schweißkontaktfläche weist vorteilhafterweise eine, bezogen auf den Betrag, stärkere Krümmung auf als die zweite Schweißkontaktfläche. Dies ermöglicht einen Erstkontaktbereich, der unabhängig von seiner exakten Position im Wesentlichen als Linien-Kontaktbereich ausgebildet ist.

Eine weitere Variante des Verfahrens nach der Erfindung sieht vor, dass sich die Schweißzone entlang einer Schweißrichtung vergrößert.

Die Schweißrichtung kann im Wesentlichen entgegengesetzt zur Zustellrichtung sein.

Vorzugsweise wird der Schaufelkranz beim Reibschweißen stationär gehalten, und der Rotorgrundkörper rotiert. Auf diese Weise werden der Schaufelkranz und insbesondere die Schaufeln gering belastet, während der Rotorgrundkörper aufgrund seiner Bauweise auf einfache Weise in Rotation versetzt werden kann.

Eine prozesstechnisch besonders vorteilhafte Ausführungsform sieht vor, dass der Erstkontaktbereich maximal 30 %, insbesondere maximal 20 %, der ersten und/oder zweiten Schweißkontaktfläche einnimmt. Da zur Ausbildung einer Schweißzone bei einer kleineren Fläche weniger Leistung benötigt wird, werden entsprechend geringere Anpress- und Schweißkräfte benötigt.

Gemäß einer bevorzugten Verfahrensvariante werden die Anpresskräfte zwischen Rotorgrundkörper und Schaufelkranz während des Reibschweißens variiert. Dies ermöglicht eine verbesserte Kontrolle des Reibschweißprozesses.

Die Erfindung betrifft darüber hinaus einen Rotor, insbesondere Gasturbinenrotor, der integral beschaufelt ist. Der Rotor hat einen Schaufelkranz mit von ihm abstehenden und an ihm befestigten Turbinenschaufeln, die durch Reibschweißen angeschweißt sind.

Weitere Merkmale und Vorteile der Erfindung ergeben sich aus der nachfolgenden Beschreibung und aus den Zeichnungen, auf die Bezug genommen wird. In den Zeichnungen zeigen:
- Figur 1 den Querschnitt eines Abschnitts des Rotorgrundkörpers und Schaufelkranzes bei Bildung eines Erstkontaktbereichs gemäß einer ersten Variante des erfindungsgemäßen Verfahrens;
- Figur 2 den Querschnitt eines Abschnitts des Rotorgrundkörpers und Schaufelkranzes bei Bildung eines Erstkontaktbereichs gemäß einer zweiten Variante des erfindungsgemäßen Verfahrens.

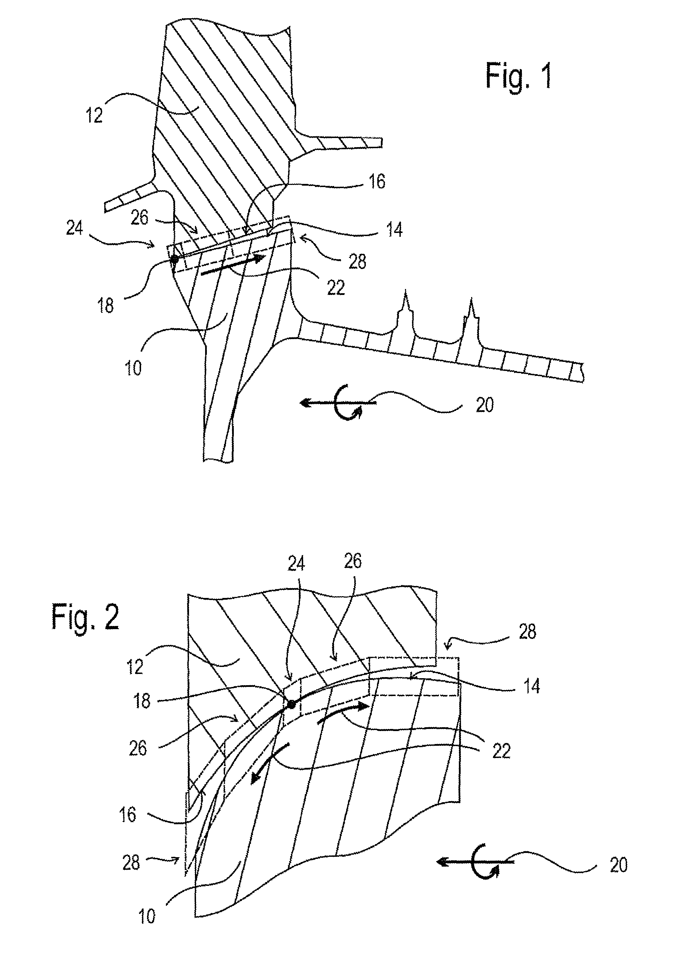

In Figur 1 ist ein Teil eines Rotorgrundkörpers 10, sowie ein Teil eines Schaufelkranzes 12, im Schnitt gezeigt, die zur Bildung eines Gasturbinenrotors miteinander reibverschweißt werden.

Der Rotorgrundkörper 10 weist eine erste Schweißkontaktfläche 14 auf, die zur Verbindung mit dem Schaufelkranz 12 vorgesehen ist. Die erste Schweißkontaktfläche 14 hat die Form eines Kegelstumpfs, wobei der Kegelstumpf mit dem schmaleren Ende in einer Zustellrichtung 20 gegen den Schaufelkranz 12 durch eine Anpresskraft beaufschlagt ist.

Der Schaufelkranz 12 weist eine konische Öffnung auf, die durch eine zweite Schweißkontaktfläche 16 begrenzt wird. Der Schaufelkranz 12 ist ein geschlossen umlaufender Ring. Alternativ wäre es auch möglich, den Schaufelkranz aus einzelnen Segmenten zusammenzusetzen, die dann erst durch Anschweißen des Rotorgrundkörpers miteinander verbunden werden.

Figur 1 zeigt den Rotorgrundkörper 10 und den Schaufelkranz 12 bevor sie durch Reibschweißen zu einem integral beschaufelten Rotor miteinander verbunden werden. Rotorgrundkörper 10 und Schaufelkranz 12 berühren sich in einem als umlaufende Linie ausgebildeten Erstkontaktbereich 18 am Rand der ersten und zweiten Schweißkontaktfläche 14, 16. Die Schweißkontaktflächen 14, 16 sind die Flächen des Rotorgrundkörpers 10 bzw. des Schaufelkranzes 12, welche aneinandergeschweißt werden.

Außerhalb des Erstkontaktbereichs 18 sind die erste und zweite Schweißkontaktfläche 14, 16 voneinander beabstandet. Dabei bildet sich ein Spalt zwischen der ersten und der zweiten Schweißkontaktfläche 14, 16, der entgegen der Zustellrichtung 20 kontinuierlich zunimmt. Durch die Ausführung der Schweißkontaktflächen 14, 16 als Kegelstumpf bzw. als Begrenzung der konischen Öffnung des Schaufelkranzes 12 nimmt die Spaltbreite in Zustellrichtung 20 linear zu.

Durch eine Anpresskraft in Zustellrichtung werden Rotorgrundkörper 10 und Schaufelkranz 12 leicht verformt, wodurch die ideale Linienberührung in eine Flächenberührung umgewandelt wird. Es ist somit auch möglich, dass der Erstkontaktbereich 18 als Fläche ausgebildet ist, wobei die Fläche einen Anteil der ersten oder zweiten Schweißkontaktfläche 14, 16 einnimmt, wobei dieser Anteil maximal 30 % beträgt, insbesondere maximal 20%.

Die Herstellung des Rotors wird im Folgenden erläutert. Der Rotorgrundkörper 10 wird bereitgestellt, wobei der Rotorgrundkörper 10 um eine Rotationsachse drehbar ist und entlang dieser Rotationsachse, insbesondere in einer Zustellrichtung 20, bewegbar ist. Die Zustellrichtung 20 und die Rotationsrichtung sind in den Figuren durch Pfeile symbolisiert.

Der Schaufelkranz 12 wird bereitgestellt und relativ zum Rotorgrundkörper 10 so positioniert, dass sich ein Erstkontaktbereich 18 zwischen einem Abschnitt der ersten Schweißkontaktfläche 14 des Rotorgrundkörpers 10 und einem Abschnitt der zweiten Schweißkontaktfläche 16 des Schaufelkranzes 12 bildet. Der Schaufelkranz 12 wird daraufhin stationär gehalten, und der Rotorgrundkörper 10 wird entlang der Zustellrichtung gegen den Schaufelkranz 12 gepresst.

Zum Reibschweißen wird der Rotorgrundkörper 10 rotiert und in der Zustellrichtung gegen den Schaufelkranz 12 gepresst, wie durch den Pfeil 20 symbolisiert. Die Rotation des Rotorgrundkörpers 10 könnte natürlich auch in der anderen Rotationsrichtung erfolgen.

In einer ersten Phase des Reibschweißprozesses bildet sich eine Schweißzone 24 im Erstkontaktbereich 18. Da sich die Schweißzone 24, insbesondere zu Beginn des Reibschweißens, nicht über die gesamte erste und/oder zweite Schweißkontaktfläche 14, 16 erstreckt, wird eine geringere Leistung zur Bildung der der Schweißzone 24 benötigt, wodurch wiederum geringere Anpress- und Schweißkräfte benötigt werden. Zudem lassen sich der Verlauf und das Volumen des Schweißwulstes gut steuern.

In einer zweiten Phase des Reibschweißprozesses vergrößert sich die Schweißzone 24, 26 in Abhängigkeit der Anpresskraft in Zustellrichtung 20 ausgehend vom Erstkontaktbereich 18 entlang einer Schweißrichtung, die im Wesentlichen entgegengesetzt zur Zustellrichtung ist. Die Schweißrichtung ist durch einen Pfeil 22 dargestellt.

In einer dritten, abschließenden Phase des Reibschweißprozesses erstreckt sich die Schweißzone 24, 26, 28 über die gesamte erste und zweite Schweißkontaktfläche 14, 16.

Für die Reibung zwischen der ersten und zweiten Schweißkontaktfläche 14, 16 ist die Normalkraft, die auf die erste und zweite Schweißkontaktfläche 14, 16 wirkt, maßgeblich, welche ihrerseits durch die Geometrien der ersten und zweiten Schweißkontaktfläche und durch die Anpresskraft in Zustellrichtung bestimmt wird. Die Anpresskräfte in Zustellrichtung zwischen Rotorgrundkörper 10 und Schaufelkranz 12 lassen sich während des Reibschweißprozesses variieren. Somit kann der Reibschweißprozess über die Anpresskräfte zwischen Rotorgrundkörper 10 und Schaufelkranz 12 und die Geometrien der ersten und zweiten Schweißkontaktfläche 14, 16 beeinflusst werden.

Da sich die Schweißzone erst im Laufe des Reibschweißprozesses vergrößert, lässt sich der Reibschweißprozess besser beeinflussen, insbesondere der Schweißwulst.

Figur 2 zeigt eine Detailansicht einer zweiten Ausführungsform der Erfindung mit einer ersten Schweißkontaktfläche 14 eines Rotorgrundkörpers 10 und einer zweiten Schweißkontaktfläche 16 eines Schaufelkranzes 12, die einen Erstkontaktbereich 18 ausbilden.

Die Schweißkontaktflächen 14, 16 weisen jeweils im Querschnitt eine Bogenform auf, wobei die erste Schweißkontaktfläche 14 des Rotorgrundkörpers 10 eine stärkere Krümmung als die zweite Schweißkontaktfläche 16 des Schaufelkranzes 12 aufweist.

Der Erstkontaktbereich 18 liegt, im Querschnitt gesehen, im mittleren Drittel der Schweißkontaktflächen 14, 16 und ist im Wesentlichen als umlaufende Linie oder kleine Fläche ausgebildet.

Ein Spalt ist zwischen der ersten und zweiten Schweißkontaktfläche 14, 16 gebildet, der ausgehend von der Erstkontaktfläche 18 sowohl in Zustellrichtung als auch entgegen der Zustellrichtung kontinuierlich zunimmt. Durch die Bogenform der Schweißkontaktflächen 14, 16 nimmt die Spaltbreite nichtlinear zu. Es ist auch möglich, die Form der Schweißkontaktflächen 14, 16 zu variieren und beispielsweise in Form von Parabeln, Hyperbeln oder als abschnittsweise verschiedene Formen auszuführen.

Das erfindungsgemäße Verfahren zur Herstellung des Rotors gemäß der in Figur 2 gezeigten Ausführungsform verläuft im Wesentlichen analog zu dem bei Figur 1 beschriebenen Verfahren.

Das Verfahren unterscheidet sich von dem zuvor beschriebenen Verfahren dadurch, dass der Erstkontaktbereich 18 im mittleren Drittel der Schweißkontaktflächen 14, 16 liegt.

Die Schweißzone 24, die sich in der ersten Phase des Reibschweißprozesses im Erstkontaktbereich 18 bildet, kann sich in der zweiten Phase des Reibschweißprozesses in zwei Schweißrichtungen vergrößern, wie beispielsweise durch die Schweißzone 24, 26 gezeigt ist. Die Schweißrichtungen sind durch die Pfeile 22 dargestellt.

Eine Schweißrichtung 22 ist im Wesentlichen in Richtung der Zustellrichtung 20, und die andere Schweißrichtung 22 ist im Wesentlichen entgegen der Richtung der Zustellrichtung 20.

In der dritten, abschließenden Phase des Reibschweißprozesses erstreckt sich die Schweißzone 24, 26, 28 über die gesamte erste und zweite Schweißkontaktfläche 14, 16.

## Patentansprüche

1. Verfahren zum Herstellen eines integral beschaufelten Rotors, insbesondere eines Gasturbinenrotors, **gekennzeichnet durch** folgende Schritte:
a) Bereitstellen eines Rotorgrundkörpers (10) mit einer ersten Schweißkontaktfläche (14);
b) Bereitstellen eines Schaufelkranzes (12) mit einer zweiten Schweißkontaktfläche (16), wobei die erste und die zweite Schweißkontaktfläche (14, 16) unterschiedliche Geometrien besitzen;
c) Bildung eines Erstkontaktbereichs (18) zwischen Abschnitten der ersten und der zweiten Schweißkontaktfläche (14, 16), indem Rotorgrundkörper (10) und Schaufelkranz (12) aneinandergepresst werden;
d) Reibschweißen des Rotorgrundkörpers (10) an den Schaufelkranz (12), wobei eine Schweißzone (24, 26, 28) gebildet wird, die sich ausgehend vom Erstkontaktbereich (18) vergrößert, um sich über die erste und zweite Schweißkontaktfläche (14, 16) zu erstrecken.

2. Verfahren nach Anspruch 1, **dadurch gekennzeichnet, dass** sich nach Bildung des Erstkontaktbereichs (18) zumindest ein Spalt zwischen der ersten und der zweiten Schweißkontaktfläche (14, 16) bildet, der in Zustellrichtung und/oder entgegen der Zustellrichtung, insbesondere kontinuierlich, zunimmt.

3. Verfahren nach Anspruch 1 oder 2, **dadurch gekennzeichnet, dass** der Erstkontaktbereich (18) an einem Rand der ersten und/oder zweiten Schweißkontaktfläche (14, 16) gebildet wird.

4. Verfahren nach Anspruch 3, **dadurch gekennzeichnet, dass** der Erstkontaktbereich (18) an dem in Zustellrichtung entfernten Rand der ersten und/oder zweiten Schweißkontaktfläche (14, 16) liegt.

5. Verfahren nach Anspruch 3 oder 4, **dadurch gekennzeichnet, dass** die erste Schweißkontaktfläche (14) eine Kegelstumpfform hat und/oder die zweite Schweißkontaktfläche (16) als konische Öffnung ausgebildet ist.

6. Verfahren nach Anspruch 1 oder 2, **dadurch gekennzeichnet, dass** der Erstkontaktbereich (18), im Querschnitt gesehen, in dem mittleren Drittel der Schweißkontaktflächen (14, 16) liegt.

7. Verfahren nach Anspruch 6, **dadurch gekennzeichnet, dass** sich die Schweißzone (24, 26, 28) in zwei Schweißrichtungen, ausgehend vom Erstkontaktbereich (18), vergrößert.

8. Verfahren nach einem der vorhergehenden Ansprüche, **dadurch gekennzeichnet, dass** die erste und/oder zweite Schweißkontaktfläche (14, 16), im Querschnitt gesehen, eine Bogenform aufweist.

9. Verfahren nach Anspruch 8, **dadurch gekennzeichnet, dass** die erste Schweißkontaktfläche (14) eine, bezogen auf den Betrag, stärkere Krümmung aufweist als die zweite Schweißkontaktfläche (16).

10. Verfahren nach einem der vorhergehenden Ansprüche, **dadurch gekennzeichnet, dass** sich die Schweißzone (24, 26, 28) entlang einer Schweißrichtung vergrößert.

11. Verfahren nach Anspruch 10, **dadurch gekennzeichnet, dass** die Schweißrichtung im Wesentlichen entgegengesetzt zur Zustellrichtung ist.

12. Verfahren nach einem der vorhergehenden Ansprüche, **dadurch gekennzeichnet, dass** der Schaufelkranz (12) beim Reibschweißen stationär gehalten und der Rotorgrundkörper (10) rotiert wird.

13. Verfahren nach einem der vorhergehenden Ansprüche, **dadurch gekennzeichnet, dass** der Erstkontaktbereich (18) maximal 30 %, insbesondere maximal 20 %, der ersten oder zweiten Schweißkontaktfläche (14, 16) einnimmt.

14. Verfahren nach einem der vorhergehenden Ansprüche, **dadurch gekennzeichnet, dass** die Anpresskräfte zwischen Rotorgrundkörper (10) und Schaufelkranz (12) während des Reibschweißens variiert werden.

15. Rotor, insbesondere Gasturbinenrotor, der integral beschaufelt ist, hergestellt nach einem der vorhergehenden Ansprüche.
